# EUROPÄISCHE PATENTSCHRIFT

(11) **EP 0 528 141 B1**
(45) Veröffentlichungstag und Bekanntmachung des Hinweises auf die Patenterteilung: **26.04.1995**
(21) Anmeldenummer: 92110608.4
(22) Anmeldetag: 24.06.1992
(51) Int. Cl.: H01B 7/04, H01B 7/18

(54) **Freitragendes Versorgungskabel**
Cantilevered supply cable
Câble d'alimentation non soutenu

(30) Priorität: 17.08.1991 DE 4127312; 18.03.1992 DE 9203633 U
(43) Veröffentlichungstag der Anmeldung: 24.02.1993
(73) Patentinhaber: ELOCAB SONDERKABEL GmbH & CO KG, D-91166 Georgensgmünd (DE)
(72) Erfinder: Bauer, Wilhelm, W-8544 Georgensgmünd (DE)
(74) Vertreter: Tergau, Enno, Dipl.-Ing.

(56) Entgegenhaltungen:
- DE-A- 2 443 854
- DE-A- 3 139 018
- GB-A- 539 109
- GB-A- 746 111

## Beschreibung

Die Erfindung betrifft ein freitragendes Versorgungskabel mit den Merkmalen des Anspruches 1.

Derartige Versorgungskabel werden zur Verbindung zwischen einer als Verbraucher und Empfänger wirksamen technischen Einrichtung und einer Maschine oder Anlage verwendet. Vor allem bei gegenüber der Anlage verfahrbaren Einrichtungen, z.B. bei Steuerungsanlagen mit ortsveränderlichem Steuerpult, ist ein biegsames Versorgungskabel erforderlich.

Solche Versorgungskabel sind aus der DE-OS 31 39 018 bekannt. Damit das Versorgungskabel biegbar und dennoch ausreichend mechanisch stabil ist, enthält es ein parallel zu den Versorgungsleitungen angeordnetes, als Kette ausgebildetes Kernelement. Die Kette besteht aus symetrischen Bleikörpern, die auf einen zugfesten Faden aufgereiht sind.

Ein derartig ausgestaltetes Kernelement genügt jedoch nicht den Anforderungen an die Biegbarkeit und Eigentragfähigkeit sowie an die mechanische Stabilität des Versorgungskabels.

Die in der obengenannten Veröffentlichung erwähnte Bleikette eignet sich nur zur Aufnahme von Zugkräften, die in Kabellängsrichtung auf das Versorgungskabel wirken. Nicht in Kabellängsrichtung wirkende Querkräfte oder sonstige Querbelastungen des Versorgungskabels kann die Bleikette dagegen nicht aufnehmen. Ferner läßt die Form der Bleikörper keine wirksame Begrenzung von Relativbewegungen benachbarter Kettenglieder zu. Eine ausreichende Trag- und Führungsfunktion des Tragorgans ist deshalb nicht gegeben. Ein derart undefiniert durchhängendes Versorgungskabel kann jedoch den Betriebsablauf stören und insbesondere bei verfahrbaren Verbrauchern die Betriebssicherheit der gesamten Anlage gefährden.

Ferner ist insbesondere bei Werkzeugmaschinen bekannt, Versorgungsleitungen für bewegliche Teile in bewegbaren Kabelpritschen zu verlegen. Derart bewegbare Kabelpritschen bestehen aus einer Vielzahl von aneinandergehängten Pritschenteilen, welche nach Art von Gliedern einer Panzerkette schwenkbar und in einer Richtung abbiegbar gelagert sind. Die einzelnen Versorgungsleitungen liegen hierbei auf der biegsamen Kabelpritsche auf. In einer Funktionsendstellung des Verbrauchers sind die Glieder der Panzerkette etwa geradlinig aneinandergereiht. Wird der Verbraucher aus dieser Funktionsendstellung in seine entgegengesetzte Funktionsendstellung verfahren, verschwenken die einzelnen Panzerkettenglieder gegeneinander, so daß die biegsame Kabelpritsche seitlich gesehen einen etwa U-förmigen Verlauf aufweist. Derart biegsame Kabelpritschen können auch als Schleppketten für Versorgungsleitungen bezeichnet werden. Diese Schleppketten sind hinsichtlich ihrer Trag- und Führungsfunktion besser geeignet als die obenerwähnte Bleikette.

Ein wesentlicher Nachteil dieser Schleppketten ist jedoch ihre notwendige nachträgliche Montage an den Versorgungsleitungen. Ein weiterer Nachteil besteht darin, daß die Biegeachse der Schleppkette nicht identisch ist mit der Mittellängsachse und somit der Biegeachse der Versorgungsleitungen. Um eine Dehnung der Versorgungsleitungen auf der Schleppkette zu verhindern, müssen die Versorgungsleitungen entsprechend locker auf der Schleppkette verlegt werden. Diese lockere Auflage erfordert konstruktiv aufwendige und montageintensive weitere Maßnahmen.

Ausgehend von den geschilderten Nachteilen liegt der Erfindung die Aufgabe zugrunde, die Eigentrag- und Führungseigenschaften sowie die mechanische Stabilität des Versorgungskabels zu verbessern bei gleichzeitigem Verzicht auf die Anbringung separater Führungselemente wie z.B. Schleppketten. Diese Aufgabe ist durch die Merkmalskombination des Anspruchs 1 gelöst.

Die limitierte Schwenkbeweglichkeit der Gelenke des Tragstrangs verhindert eine Überdehnung und letztlich ein Zerreißen des Versorgungskabel. Somit sind die Versorgungsleitungen und der Tragstrang vor äußeren mechanischen Beschädigungen immer gut geschützt. Ein unbeschädigter Hüllmantel des Versorgungskabels gewährleistet außerdem eine gute kinematische Koppelung des Tragstrangs und der Versorgungsleitungen. Die limitierte Schwenkbeweglichkeit der Gelenke bewirkt, daß auch die Versorgungsleitungen nur begrenzt biegbar sind und deshalb vor einer Überdehnung ebenfalls gut geschützt sind. Diese Vorteile gewährleisten eine lange Lebensdauer des Versorgungskabels und eine gute Funktionssicherheit.

Der Begriff "Versorgungsleitung" schließt elektrische Leitungen und Lichtwellenleiter ein. Ebenso sind schlauchartige Leitungen wie Flüssigkeitsleitungen, Hydraulik- oder Pneumatikleitungen oder dergleichen gemeint.

Die Ansprüche 2 und 3 betreffen Maßnahmen, die Biegbarkeit des Versorgungskabels in nur eine Biegerichtung zulassen und das Maß des Knickwinkels zu begrenzen. Auf diese Weise läßt sich das Versorgungskabel über seinen geradlinigen Verlauf hinaus nicht ausbiegen, wodurch bei erwünschtem horizontalen Verlauf des Versorgungskabels ein Durchhängen sowohl des Versorgungskabels als auch des Tragstrangs weitgehend ausgeschlossen ist. Die Begrenzung der Biegbarkeit des Tragstrangs auf seine Knicklage verhindert, daß die Versorgungsleitungen überdehnt werden. Somit ist die Lebensdauer der Versorgungsleitungen erhöht.

Nach Anspruch 4 werden die Materialeigenschaften unterschiedlicher Versorgungsleitungen berücksichtigt. Hierbei ist vorteilhaft, daß der Tragstrang aus einzelnen Kettengliedern zusammengesetzt ist. Mit der variablen Anzahl von Kettengliedern ist auf einfache Weise die größtmögliche Krümmbarkeit des Tragstrangs an die größtmögliche Krümmbarkeit der Versorgungsleitung möglich. Aufgrund dieser Voreinstellbarkeit der maximalen Krümmung des Tragstrangs ist ein Überdehnen der Versorgungsleitung von vornherein ausgeschlossen.

Anspruch 5 betrifft den vorteilhaften Aufbau des Tragstrangs. Die lösbare Verbindung der einzelnen Kettenglieder ermöglicht die einfache Verkürzung und Verlängerung des Tragstrangs. Die Länge des Tragstrangs ist somit an unterschiedliche Längen der Versorgungsleitungen ohne großen Aufwand anpaßbar. Auch ist es fertigungstechnisch günstig, den Tragstrang mit den Kettengliedern nach Anspruch 5 aufzubauen. Zur Herstellung des von einer offenen kinematischen Kette gebildeten Tragstrangs sind außer den Kettengliedern keine weiteren Bauteile erforderlich.

Die Ansprüche 6 und 7 betreffen eine vorteilhafte Gestaltung der Kupplungselemente. Grundsätzlich ist die Verschwenkbarkeit des Versorgungskabels in mehrere Schwenkrichtungen unerwünscht. Der walzengelenkartige Aufbau der Kupplungselemente berücksichtigt dies und ermöglicht die Verschwenkbarkeit zweier benachbarter Kettenglieder gegeneinander in nur einer Schwenkrichtung.
Die komplementäre Ausgestaltung von Rastvorsprung und Aufnahmenut ermöglicht einen formschlüssigen Eingriff. Dies erhöht die Stabilität des Tragstrangs und damit auch des Versorgungskabels. Aufgrund der limitierten Schwenkbeweglichkeit der einzelnen Gelenke gegeneinander ist der Tragstrang nach Art einer Wirbelsäule wirksam mit entsprechend guten Trag- und Führungseigenschatten für das Versorgungskabel.

Zudem werden die vorteilhaften Gebrauchseigenschaften des Versorgungskabels durch einfache Montageeigenschaften ergänzt. Fertigungstechnisch günstig ist, daß der Rastvorsprung und die Aufnahmenut in zur Kabellängsrichtung vertikaler Richtung nur ineinandergeschoben werden. Zudem erleichtert die komplementäre Ausgestaltung der beiden Kettengliedenden zum einen als Aufnahmestirnseite und zum anderen als Kupplungsstirnseite die einfache und fehlerfreie Montage der einzelnen Kettenglieder zum Tragstrang. Dies ist auch bei der automatischen Fertigung von Vorteil.

Die Ansprüche 8 und 9 betreffen besondere Ausführungsformen der Kettenglieder. Die Schwenkbeweglichkeit der Gelenke wird hierdurch begrenzt. In ihren Extremlagen stützen sich die Kettenglieder an ihren Anschlägen und Anlageschultern selbstständig gegeneinander ab. Sowohl in seiner Strecklage als auch in seiner Knicklage ist das Versorgungskabel in einer vordefinierten Biegestellung geführt und abgestützt. Dies ist von Vorteil bei der Verlegung des Versorgungskabels in Eckbereichen, z.B. bei einer Decke und der sich daran anschließenden Seitenwand. Auf einen Kabelschacht oder Kabelhalter zur Abstützung des Versorgungskabels in seinem Biegebereich kann deshalb verzichtet werden.

Anspruch 10 betrifft eine zweckmäßige Anordnung von Versorgungsleitungen und Tragsträngen, um eine ausreichende Stabilität des Versorgungskabels zu gewährleisten.

Die Ansprüche 11 und 12 betreffen Möglichkeiten, den Tragstrang mit den Versorgungsleitungen kinematisch zu koppeln. Der Stranghohlkanal gemäß Anspruch 11 und der stoffschlüssig den Tragstrang umgebene Hüllmantel gemäß Anspruch 12 ermöglichen, daß die Kettenglieder keine seitlichen Anschläge zur Begrenzung der Verschieblichkeit der Aufnahmenut und des Rastvorsprunges gegeneinander benötigen. Eine Verschiebung einzelner Kettenglieder quer zur Tragstranglängsrichtung ist wegen der Einbettung des Tragstrangs in den Hüllmantel nicht möglich. Dies erhöht die Stabilität des Tragstrangs. Außerdem ist das Versorgungskabel auf diese Weise mit Querkräften belastbar, was dessen mechanische Stabilität ebenfalls vergrößert.

Die Kettenglieder nach Anspruch 13 wirken sich vorteilhaft auf den Bearbeitungsaufwand der Kettenglieder und damit auch vorteilhaft auf die Fertigungs- und Logistikkosten aus. Derartig ausgestaltete Kettenglieder erlauben außerdem einen einfachen und fehlerfreien Zusammenbau des Tragstrangs.

Die Kertenglieder nach Anspruch 14 ermöglichen eine flexible Anpassung des Tragstrangs an unterschiedliche gewünschte oder erforderliche Biegestellungen des Versorgungskabels. Außerdem ist es mit unterschiedlich langen Kettengliedern möglich, ohne Veränderung des Knickwinkels die Extremlage des Versorgungskabels in verschiedenen Bereichen entlang der Kabellängs-richtung unterschiedlich zu limitieren.

Anspruch 15 betrifft ein Verfahren zur Herstellung eines freitragenden Leitungskabels gemäß Anspruch 1. Durch das bekannte Anbringen der Isolierungshülle am Leitungsdraht wird gleichzeitig die stoffschlüssige Verbindung zwischen Leitungsdraht und dem als Rückgrat wirksamen Trag- und Führungselement realisiert. Zusätzliche Montage- und Zusatzarbeiten entfallen bei diesem Herstellungsverfahren.

Der Erfingungsgegenstand wird anhand der in den Zeichnungen dargestellten Ausführungsbeispiele näher erläutert. Es zeigen:
- Fig. 1: eine perspektivische Darstellung des Versorgungskabels mit teilweise freigelegtem Tragstrang,
- Fig. 2: die Querschnittsdarstellung durch das Versorgungskabel gemäß der Schnittlinie II-II in Fig. 1,
- Fig. 3: die Querschnittsdarstellung eines weiteren Versorgungskabels,
- Fig. 4: die Seitenansicht, Draufsicht und Vorderansicht des Kettengliedes,
- Fig. 5: eine perspektivische Darstellung des Tragstrangs,
- Fig. 6: die Darstellung des Details VI aus Fig. 5.

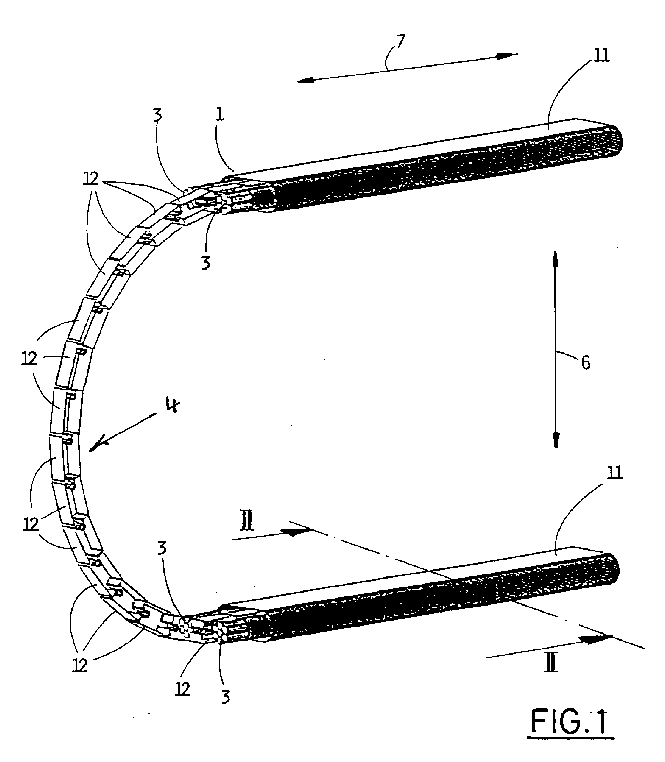

In Fig. 1 ist das Versorgungskabel 1 in einer U-Form perspektivisch dargestellt. Die beiden U-Schenkel sind in Längsrichtung 7 angeordnet. Zwischen den beiden U-Schenkeln befindet sich ein Abstand entlang einer Kabelhöhenrichtung 6. Im Bereich des U-Grundes ist der Tragstrang 4 freigelegt. Der Tragstrang 4 besteht aus den aneinandergereihten Kettengliedern 12. Im Bereich des U-Grundes befinden sich die Kettenglieder 12 in ihrer Knicklage. Im Bereich der U-Schenkel sind die Kettenglieder 12 geradlinig in Längsrichtung 7 aneinandergereiht. Dort befinden sich die Kettenglieder 12 in ihrer Strecklage. Der Tragstrang 4 ist im Bereich der U-Schenke beidseitig von jeweils einer aus sieben einzelnen Adern bestehenden Versorgungsleitung 3 flankiert. Die Versorgungsleitungen 3 sind parallel zum Tragstrang 4 angeordnet. Im Bereich des U-Grundes sind die Versorgungsleitungen 3 nicht dargestellt. Die Versorgungsleitungen 3 und der Tragstrang 4 sind von einem gemeinsamen Hüllmantel 11 umgeben. In Fig. 1 ist der Hüllmantel 11 nur im Bereich der U-Schenkel dargestellt.

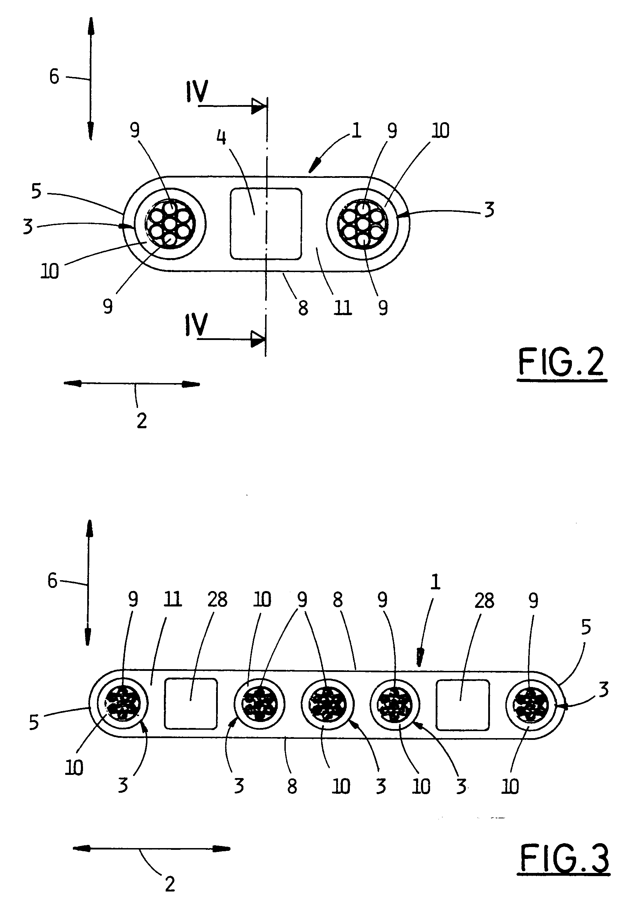

In Fig. 2 ist das Versorgungskabel 1 aus Fig. 1 in Querrichtung 2 geschnitten dargestellt. Im Versorgungskabel 1 sind in Querrichtung 2 nebeneinander der Tragstrang 4 und die beiden Versorgungsleitungen 3 angeordnet. Die Versorgungsleitungen 3 und der Tragstrang 4 verlaufen im Versorgungskabel 1 parallel zueinander. Der Tragstrang 4 ist beidseitig von jeweils einer Versorgungsleitung 3 flankiert. Das Versorgungskabel 1 ist in Querrichtung 2 von den Kabelkanten 5 begrenzt.

Senkrecht zur Querrichtung 2 verläuft die Kabelhöhenrichtung 6, so daß die Querrichtung 2 und die Kabelhöhenrichtung 6 die Zeichnungsebene der Fig. 2 aufspannen. Senkrecht zur Kabelhöhenrichtung 6 und zur Querrichtung 2, in die Zeichnungsebene der Fig. 2 gewissermaßen hinein, verläuft die Längsrichtung 7 (Fig. 1). Das Versorgungskabel 1 ist in Kabelhöhenrichtung 6 von seinen Flachseiten 8 begrenzt.

Die Versorgungsleitung 3 besteht in Fig. 2 aus sieben einzelnen Adern 9 und einem diese umgebenden Bündelungsmantel 10. Die Versorgungsleitung 3 kann prinzipiell auch eine einadrige Leitung sein. Der Bündelungsmantel 10 bündelt die einzelnen Adern 9 und gewährleistet einen mechanischen Schutz der Versorgungsleitung 3. Bei Verwendung entsprechender Materialien kann der Bündelungsmantel 10 auch eine Isolierfunktion haben.

Der Tragstrang 4 weist in Fig. 2 einen quadratischen Querschnitt auf. Die Versorgungsleitungen 3 und der Tragstrang 4 liegen in dem Hüllmantel 11 eingebettet ein. Mittels des Hüllmantels 11 sind die Versorgungsleitungen 3 und der Tragstrang 4 folglich zu einer das Versorgungskabel 1 bildenden Einheit stoffschlüssig und einstückig miteinander verbunden. Außerdem bietet der Hüllmantel 11 einen mechanischen Schutz des Versorgungskabels 1 und kann eine Isolierungsfunktion erfüllen.

Fig. 3 läßt eine weitere Ausführungsform des Versorgungskabels 1 erkennen. Die Umrißform des Versorgungskabels 1 entspricht im wesentlichen derjenigen des Versorgungskabels 1 in Fig. 2. Die Ausdehnung des zentralen Bereichs des Versorgungskabels 1 in Querrichtung 2 gesehen ist jedoch in Fig. 3 größer. In dem zentralen Bereich sind in Querrichtung 2 nebeneinander drei parallele Versorgungsleitungen 3 angeordnet. Beidseitig schließt sich jeweils in Querrichtung 2 ein Stranghohlkanal 28 an. Die Hohlquerschnittsform der Stranghohlkanäle 28 ist derart an die Querschnittsform des Tragstrangs 4 angepaßt, daß dieser formschlüssig in den Stranghohlkanal 28 eingeführt werden kann. Auf diese Weise wird wie bei der stoffschlüssigen Verbindung des Tragstrangs 4 und der Versorgungsleitungen 3 in Fig. 2 eine kinematische Koppelung zwischen einem Tragstrang 4 und den Versorgungsleitungen 3 hergestellt. Es besteht also die Möglichkeit einer stoffschlüssigen und einer formschlüssigen Verbindung zwischen Tragstrang 4 und Versorgungsleitung 3.

Die Stranghohlkanäle 27 sind jeweils von einer im Bereich der Kabelkanten 5 angeordneten Versorgungsleitung 3 flankiert. Sämtliche Versorgungsleitungen 3 und die beiden Stranghohlkanäle 27 sind in Fig. 3 parallel zueinander angeordnet.

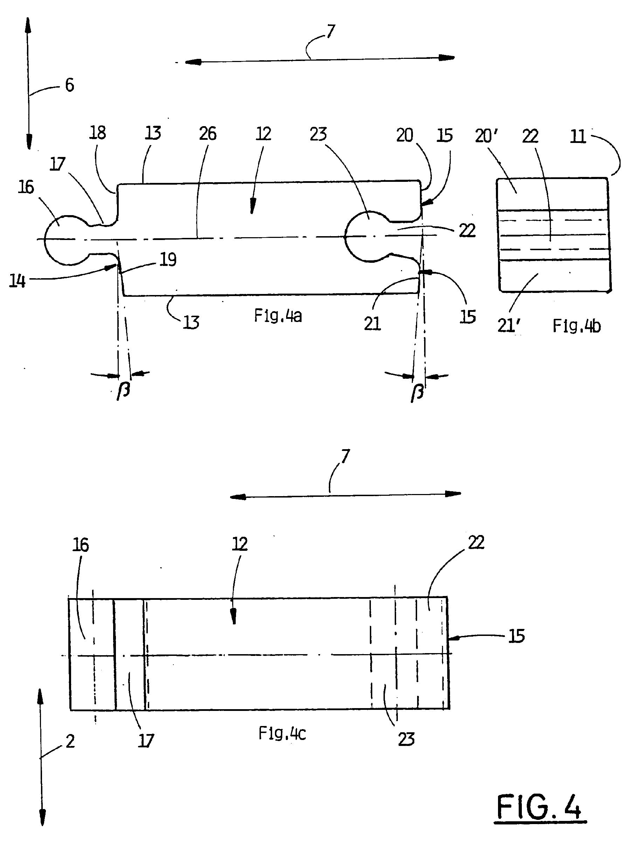

Die Tragstränge 4 sind aus einer Vielzahl von Kettengliedern 12 zusammengesetzt. Die mit Fig. 4a bezeichnete Teilfigur aus Fig. 4 zeigt ein derartiges Kettenglied 12 in seiner Seitenansicht (gemäß Schnitt IV-IV in Fig. 2). In Kabelhöhenrichtung 6 ist das Kettenglied 12 von den Gliedflachseiten 13 begrenzt. Die Gliedflachseiten 13 bilden gleichsam die Tragebenen eines jeden Kettengliedes 12 des Tragstrangs 4. Etwa senkrecht in Kabelhöhenrichtung 6 zu den Gliedflachseiten 13 verlaufen die Gliedstirnseiten, die Kupplungsstirnseite 14 und die Aufnahmestirnseite 15. Die Aufnahmestirnseite 15 weist einen nach Art eines Kopfes in Längsrichtung 7 aus dem Kettenglied 12 vorstehenden Rastvorsprung 16 auf. Der Rastvorsprung 16 ist über den Vorsprungshals 17 mit dem Körper des Kettengliedes 12 verbunden. Die dem Vorsprungshals 17 in Kabelhöhenrichtung 6 benachbarten Bereiche der Kupplungsstirnseite 14 bilden jeweils eine Anlageschulter für noch näher zu beschreibende Bereiche der Aufnahmestirnseite 15 des jeweils benachbarten Kettengliedes 12.

Die eine der beiden Anlageschultern verläuft exakt rechtwinklig zu den Gliedflachseiten 13 und bildet die Streckanlageschulter 18. Die der Streckanlageschulter 18 benachbarte Knickanlageschulter 19 verläuft gegenüber der Kabelhöhenrichtung 6 um einen Schrägungswinkel β abgeschrägt.

Die der Kupplungsstirnseite 14 in Längsrichtung 7 abgewandte Aufnahmestirnseite 15 ist durch den Strecklagenanschlag 20 und den Knicklagenanschlag 21 gebildet, wobei der Strecklagenanschlag 20 und der Knicklagenanschlag 21 gabelartig aus dem Körper des Kettengliedes 12 in Längsrichtung 7 hinausstehen. Der Strecklagenanschlag 20 und der Knicklagenanschlag 21 flankieren den zwischen sich liegenden Nutkragen 22, welcher in Richtung auf den Körper des Kettengliedes 12 in die Aufnahmenut 23 mündet. Der Strecklagenanschlag 20 verläuft analog der Streckanlageschulter 18 senkrecht zu den Gliedflachseiten 13, also in Kabelhöhenrichtung 6, während der Knicklagenanschlag 21 analog der Knickanlageschulter 19 zur Kabelhöhenrichtung 6 um den Schrägungswinkel β abgeschrägt verläuft.

Die mit Fig. 4b bezeichnete Teilfigur aus Fig. 4 zeigt die Draufsicht auf die Aufnahmestirnseite 15 mit dem Nutkragen 22 und der Streckanschlagsfläche 20′ sowie der Knickanschlagsfläche 21′.

Die mit Fig. 4c bezeichnete Teilfigur aus Fig. 4 zeigt die Seitenansicht des Kettengliedes 12, wobei die Längsrichtung 7 und die Querrichtung 2 die Zeichnungsebene der Fig. 4c aufspannen. In Fig. 4c sind im Bereich der Aufnahmestirnseite 15 der Nutkragen 22 und die Aufnahmenut 23 gestrichelt gezeichnet, sowie der Rastvorsprung 16 und der Vorsprungshals 17 durchgehend gezeichnet dargestellt.

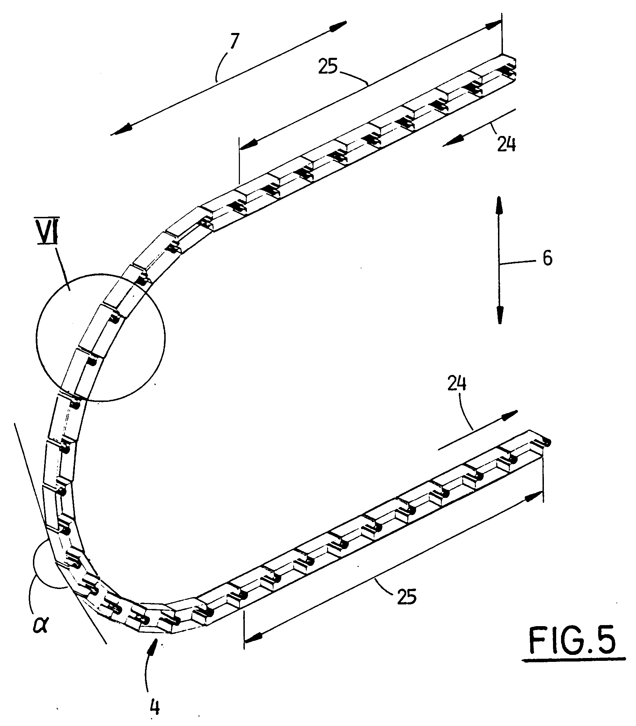

In Fig. 5 ist der Tragstrang 4 erkennbar. Er ist U-förmig angeordnet entsprechend der Anordnung des Versorgungskabels 1 in Fig. 1. Die in Fig. 5 nicht dargestellten Versorgungsleitungen 3 flankieren den Tragstrang 4 entlang der Wirkrichtung 24. Im Bereich des Freiendes eines U-Schenkels des Tragstrangs 4 ist die Versorgungsleitung 3 - falls es sich um eine elektrische Leitung handelt - an einen elektrischen Verbraucher angeschlossen, während die Versorgungsleitung 3 im Bereich des Freiendes des anderen U-Schenkels z.B. an einer Stromquelle angeschlossen ist.

Der in Fig. 5 dargestellte Streckbereich 25 des Versorgungskabels 1 zeigt die Kettenglieder 12 in ihrer Strecklage. In der Strecklage liegen jeweils die Fläche 20′ des Strecklagenanschlags 20 und die Fläche der Streckanlageschulter 18 (Fig. 4) zweier benachbarter Kettenglieder 12 aneinander an. Durch den rechtwinkligen Verlauf der Streckanlageschulter 18 und des Strecklagenanschlags 20 zur Längsrichtung 7 verlaufen die Mittellängsachsen 26 der einzelnen Kettenglieder 12 exakt in Längsrichtung 7. Die Längsrichtung 7 bildet hier bei montiertem Versorgungskabel 1 die Horizontalrichtung. Das Versorgungskabel 1 verläuft exakt in dieser Horizontalrichtung, ohne nach unten durchzuhängen. Der Knickwinkel α zweier benachbarter Kettenglieder beträgt im Streckbereich 25 exakt 180°. Dem Streckbereich 25 in Wirkrichtung 24 benachbart ist der Biegebereich des Leitungskabels 1. Der Biegebereich entspricht dem U-Grund des Tragstrangs 4 in Fig. 5. Im Biegebereich des Versorgungskabels 1 verlaufen die Mittellängsachsen 26 zweier benachbarter Kettenglieder 12 nicht mehr in Längsrichtung 7. Im Biegebereich sind die einander benachbarten Kettenglieder 12 vielmehr derart gegeneinander verschwenkt, daß ihr Knickwinkel α ein von 180° verschiedenes Maß annimmt.

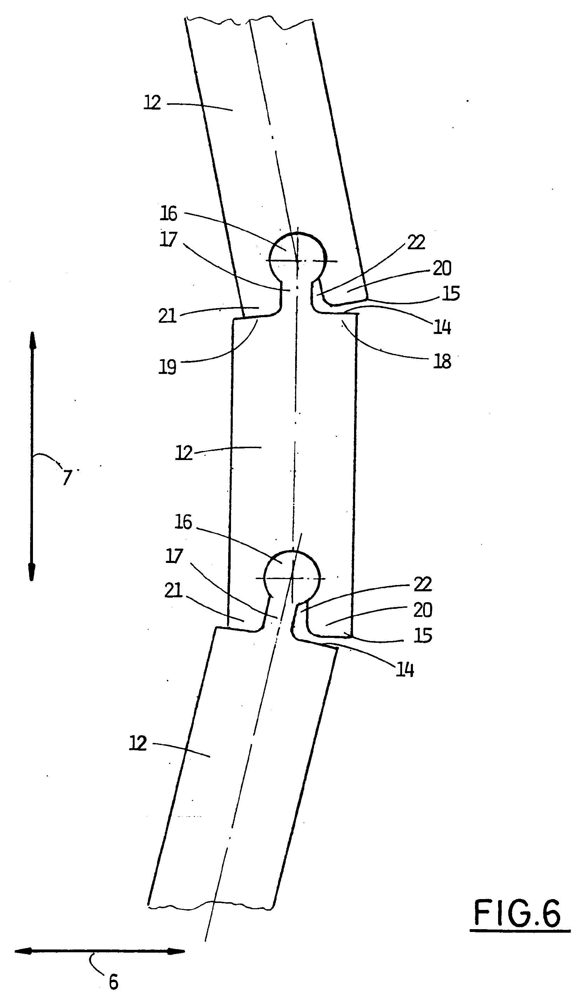

Die Kettenglieder 12 sind in der dem Ausschnitt VI in Fig. 5 entsprechenden Fig. 6 entsprechend miteinander verkuppelt:

Zwei einander benachbarte Kettenglieder 12 stoßen jeweils mit einer Kupplungsstirnseite 14 und einer Aufnahmestirnseite 15 aneinander. Die Kupplungsstirnseiten 14 und die Aufnahmestirnseiten 15 sind hierbei komplementär zueinander ausgelegt, so daß der Rastvorsprung 16 des einen Kettengliedes 12 jeweils in die Aufnahmenut 23 des benachbarten Kettengliedes 12 in Querrichtung 2 einschiebbar ist, wobei der Vorsprungshals 17 mit Spiel im Nutkragen 22 einliegt. Der Rastvorsprung 16 und die Aufnahmenut 23 bilden ein Walzengelenk aus. Ein derartiges Walzengelenk weist eine Schwenkrichtung und eine Schieberichtung auf. Die Schieberichtung des durch den Rastvorsprung 16 und die Aufnahmenut 23 gebildeten Walzengelenks verläuft in Querrichtung 2, während die Schwenkrichtung zweier benachbarter Kettenglieder 12 in Kabelhöhenrichtung 6 verläuft. Die Kettenglieder 12 sind also aus der Längsrichtung 7 in Kabelhöhenrichtung 6 hinausschwenkbar. Das vom Rastvorsprung 16 und der Aufnahmenut 23 gebildete Walzengelenk ist als Kupplung zwischen jeweils zwei benachbarten Kettengliedern 12 wirksam.

Die zueinander komplementär ausgebildeten Kupplungsstirnseiten 14 und Aufnahmestirnseiten 15 sowie die Ausgestaltung der Kupplungselemente als Walzengelenk ermöglichen, daß das Versorgungskabel 1 bei eingebettetem Tragstrang 4 auch mit in Querrichtung 2 wirksamen Kräften belastbar ist.

Zur Montage des Tragstrangs 4 ist es indessen nicht notwendig, die Kettenglieder 12 durch das Einschieben des Rastvorsprungs 16 in die Aufnahmenut 23 in Querrichtung 2 zusammenzufügen. Die vorzugsweise aus Kunststoff gefertigten Kettenglieder 12 können auch mit einem Strecklagenanschlag 20 und einem Knickanschlag 21 derart ausgebildet sein, daß die gabelartig aus dem Körper des Kettengliedes 12 hinausstehenden Anschläge 20,21 in Kabelhöhenrichtung 6 auseinanderfederbar angeordnet sind. Die einzelnen Kettenglieder 12 werden bei dieser Ausführungsform einfach in Längsrichtung 7 zusammengeschoben. Hierzu wird der Rastvorsprung 16 in den Nutkragen 22 eingeführt und durch Druck in Längsrichtung 7 verfahren, wobei der Strecklagenanschlag 20 und der Knickanschlag 21 in Kabelhöhenrichtung 6 voneinander weg auseinanderfedern, so daß der Rastvorsprung 16 bis in die Aufnahmenut 23 durch den Nutkragen 22 hineingleitet. Auch ist es nicht notwendig, daß benachbarte Kettenglieder 12 formschlüssig ineinander eingreifen. Sie können bei der Herstellung des Versorgungskabels 1 auch in Längsrichtung 7 lose aneinandergereiht sein und mit den Versorgungsleitungen 3 stoffschlüssig verbunden sein.

Zwei einander benachbarte, im Biegebereich angeordnete Kettenglieder 12 sind so weit verschenkbar, bis die Fläche der Knickanlageschulter 19 auf der Fläche 21′ des benachbarten Knicklagenanschlages 21 zu liegen kommt. Knicklagenanschlag 21 und Strecklagenanschlag 20 begrenzen folglich zusammen mit ihren zugeordneten Knickanlageschultern 19 und Streckanlageschultern 18 des benachbarten Kettenglieds 12 die Schwenkbarkeit von einander benachbarten Kettengliedern 12. Die maximale Abweichung des Knickwinkels α von 180° ist dabei an die maximale Biegbarkeit der Versorgungsleitung 3 angepaßt. Auf diese Weise ist ein Überdehnen der Versorgungsleitung 3 im Biegebereich des Versorgungskabels 1 wirksam ausgeschlossen.

Die gemäß Fig. 4a ausgestalteten Strecklagenanschläge 20 und Streckanlageschultern 18 ermöglichen eine einseitige Verschwenkbarkeit benachbarter Kettenglieder 12 aus der Längsrichtung 7 heraus in Kabelhöhenrichtung 6. Es ist aber auch denkbar, daß benachbarte Kettenglieder 12 aus der Längsrichtung 7 heraus beidseitig in Kabelhöhenrichtung 6 verschwenkbar sind. Zu diesem Zweck können die Streckanlageschultern 18 und die Strecklagenanschläge 20 gegenüber der Kabelhöhenrichtung 6 abgeschrägt ausgebildet sein, z.B. analog den Knickanlageschultern 19 und den Knicklagenanschlägen 21.

Während das Versorgungskabel 1 von dem Tragstrang 4 in den Streckbereichen 25 im wesentlichen getragen ist, ist das Versorgungskabel in dem die Streckbereiche 25 verbindenden Biegebereich im wesentlichen geführt. Der Tragstrang 4 steuert folglich das Versorgungskabel 1 in Wirkrichtung 24. In den Streckbereichen 25 beträgt der Knickwinkel α zweier benachbarter Kettenglieder 12 180°, wobei durch die Anlage der Strecklagenanschläge 20 an den benachbarten Streckanlageschultern 18 ein Durchhängen des Versorgungskabels 1 in Kabelhöhenrichtung 6 wirksam verhindert ist.

Der maximale Knickwinkel α zwischen zwei benachbarten Kettengliedern 12 ist determiniert durch den Schrägungswinkel β, welcher in der Ebene zwischen der Kabelhöhenrichtung 6 und der Längsrichtung 7 (Fig. 4a) aufgespannt ist. Es ist evident, daß zur Erzeugung eines Knickwinkels α einerseits nur die Knickanlageschulter 19 oder der Knicklagenanschlag 21 einen Schrägungswinkel β aufweisen kann, andererseits sowohl die Knickanlageschulter 19 als auch der Knicklagenanschlag 21 mit einem Schrägungswinkel β versehensein können. Das Maß für die Biegung des gesamten Tragstrangs 4 und damit des gesamten Versorgungskabels 1 ist einerseits durch den aus den Schrägungswinkeln β resultierenden maximalen Knickwinkel α determiniert und andererseits durch die Länge der Kettenglieder 12 in Längsrichtung 7 und deren Anzahl in dem Tragstrang 4 determiniert.

### Bezugszeichenliste

- 1: Versorgungskabel
- 2: Querrichtung
- 3: Versorgungsleitung
- 4: Tragstrang
- 5: Kabelkante
- 6: Kabelhöhenrichtung
- 7: Längsrichtung
- 8: Flachseite
- 9: Ader
- 10: Bündelungsmantel
- 11: Hüllmantel
- 12: Kettenglied
- 13: Gliedflachseite
- 14: Kupplungsstirnseite
- 15: Aufnahmestirnseite
- 16: Rastvorsprung
- 17: Vorsprungshals
- 18: Streckanlageschulter
- 19: Knickanlageschulter
- 20: Strecklagenanschlag
- 20′: Streckanschlagsfläche
- 21: Knicklagenanschlag
- 21′: Knickanschlagsfläche
- 22: Nutkragen
- 23: Aufnahmenut
- 24: Wirkrichtung
- 25: Streckbereich
- 26: Mittellängsachse
- 27: Stranghohlkanal
- α: Knickwinkel
- β: Schrägungswinkel

## Patentansprüche

1. Versorgungskabel (1) mit
- wenigstens einer Versorgungsleitung (3),
- einem parallel dazu angeordneten, aus in Kabellängsrichtung aneinandergereihten Gliedern (12) bestehenden Tragstrang (4) und
- einem die Versorgungsleitung (3) und den Tragstrang (4) umgebenden Hüllmantel (11),
dadurch gekennzeichnet,
daß
- die Glieder (12) mit Gelenken zu einer den Tragstrang (4) bildenden offenen kinematischen Kette miteinander verbunden sind und
- die Schwenkbeweglichkeit der Gelenke auf einen Schwenkbereich zwischen zwei Extremlagen limitiert ist.

2. Kabel nach Anspruch 1,
dadurch gekennzeichnet,
daß sich benachbarte Kettenglieder (12) in der einen Extremlage in einer Strecklage befinden, in der sie etwa geradlinig aneinandergereiht sind.

3. Kabel nach Anspruch 1 und 2,
dadurch gekennzeichnet,
daß sich benachtbarte Kettenglieder (12) in der anderen Extremlage in einer Knicklage befinden, in der sie die Schenkel eines Knickwinkels (α) mit dem Gelenk als Scheitelpunkt bilden.

4. Kabel nach Anspruch 3,
dadurch gekennzeichnet,
daß der Knickwinkel (α) der Biegbarkeit der Versorgungsleitung (3) anpaßbar ist.

5. Kabel nach einem oder mehreren der vorhergehenden Ansprüche,
dadurch gekennzeichnet,
daß lösbare Kupplungselemente (16,23) zur Bildung der Gelenke an den Enden der Kettenglieder (12) angeordnet sind.

6. Kabel nach Anspruch 5,
dadurch gekennzeichnet, daß
- am als Kupplungsstirnseite (14) wirksamen Ende des Kettengliedes (12) ein Rastvorsprung (16) angeordnet ist,
- der Kupplungsstirnseite (14) gegenüberliegend am als Aufnahmestirnseite (15) wirksamen Ende eine zum Rastvorsprung (16) komplementär ausgebildete Aufnahmenut (23) angeordnet ist und
- der Rastvorsprung (16) und die Aufnahmenut (23) die Kupplungselemente sind.

7. Kabel nach Anspruch 6,
dadurch gekennzeichnet,
daß der Rastvorsprung (16) und die Aufnahmenut (23) zweier benachbarter miteinander verbundener Kettenglieder (12) ein Walzengelenk bilden.

8. Kabel nach Anspruch 7,
dadurch gekennzeichnet,
daß die dem Rastvorsprung (16) benachbarten Bereiche der Kupplungsstirnseite (14) als Anlageschultern (18,19) für Anschläge (20,21) auf der Aufnahmestirnseite (15) des benachbarten Kettengliedes (12) ausgebildet sind.

9. Kabel nach Anspruch 8,
dadurch gekennzeichnet,
daß die Anschläge (20,21) auf der Aufnahmestirnseite (15) des Kettengliedes (12) gabelartig vorstehen und zwischen sich die Aufnahmenut (23) bilden.

10. Kabel nach einem oder mehreren der vorhergehenden Ansprüche,
dadurch gekennzeichnet,
daß eine Versorgungsleitung (3) im Hüllmantel (11) mindestens einseitig von einem Tragstrang (4) flankiert ist.

11. Kabel nach einem oder mehreren der vorhergehenden Ansprüche,
dadurch gekennzeichnet,
daß der Hüllmantel (11) einen Stranghohlkanal (27) zum Einführen des Tragstrangs (4) enthält.

12. Kabel nach einem oder mehreren der vorhergehenden Ansprüche,
dadurch gekennzeichnet,
daß der Hüllmantel (11) die Versorgungsleitung (3) und den Tragstrang (4) stoffschlüssig miteinander verbindet.

13. Kabel nach einem oder mehreren der vorhergehenden Ansprüche,
dadurch gekennzeichnet,
daß der Tragstrang (4) aus baugleichen Kettengliedern (12) zusammengesetzt ist.

14. Kabel nach einem oder mehreren der vorhergehenden Ansprüche,
dadurch gekennzeichnet,
daß die Kettenglieder (12) von ungleicher Länge sind.

15. Verfahren zur Herstellung eines Leitungskabels (1) nach Anspruch 1 mit folgendem ersten Verfahrensschritt:
1. Mehrere Leitungsdrähte (3) werden parallel nebeneinander positioniert, gekennzeichnet durch folgende weitere Verfahrensschritte:
2. Neben den Leitungsdrähten (3) wird parallellaufend ein Trag- und Führungselement (= 4) positioniert und
3. sowohl die Leitungsdrähte (3) als auch das Trag- und Führungselement (= 4) werden mit dem die Isolierungsumhüllung (11) bildenden Material umspritzt zur stoffschlüssigen Verbindung von Leitungsdrähten (3) und Trag- und Führungselement (= 4) in einem Arbeitsgang.

## Claims

1. Supply cable (1) having
- at least one supply lead (3),
- a suspension strand (4) arranged parallel to it and consisting of links (12) lined up next to one another in the longitudinal direction of the cable and
- an enveloping casing (11) surrounding the supply lead (3) and the suspension strand (4),
characterized
in that
- the links (12) are connected to one another by means of joints to form an open kinematic chain which forms the suspension strand (4) and
- in that the pivoting mobility of the joints is limited to a pivoting range between two extreme positions.

2. Cable according to Claim 1,
characterized in that neighbouring chain links (12) are in the one extreme position in an extended position in which they are lined up next to one another approximately rectilinearly.

3. Cable according to Claim 1 and 2,
characterized in that neighbouring chain links (12) are in the other extreme position in a kinked position in which they form the legs of a kink angle (α), the joint being the apex.

4. Cable according to Claim 3,
characterized in that the kink angle (α) can be matched to the flexibility of the supply lead (3).

5. Cable according to one or more of the preceding claims,
characterized in that detachable coupling elements (16, 23) are arranged at the ends of the chain links (12) to form the joints.

6. Cable according to Claim 5,
characterized
- in that a latching projection (16) is arranged at that end of the chain link (12) which acts as the coupling end (14),
- in that a retaining groove (23) which complements the latching projection (16) is arranged at that end which acts as retaining end (15) and is opposite the coupling end (14), and
- in that the latching projection (16) and the retaining groove (23) are the coupling elements.

7. Cable according to Claim 6,
characterized in that the latching projection (16) and the retaining groove (23) of two neighbouring mutually connected chain links (12) form a roller joint.

8. Cable according to Claim 7,
characterized in that the regions, neighbouring the latching projection (16), of the coupling end (14) are constructed as bearing shoulders (18, 19) for stops (20, 21) on the retaining end (15) of the neighbouring chain link (12).

9. Cable according to Claim 8,
characterized in that the stops (20, 21) on the retaining end (15) of the chain link (12) project like a fork and form the retaining groove (23) between themselves.

10. Cable according to one or more of the preceding claims,
characterized in that a supply lead (3) in the enveloping casing (11) is flanked at least on one side by a suspension strand (4).

11. Cable according to one or more of the preceding claims,
characterized in that the enveloping casing (11) contains an extruded hollow duct (27) for inserting the suspension strand (4).

12. Cable according to one or more of the preceding claims,
characterized in that the enveloping casing (11) connects the supply lead (3) and the suspension strand (4) to one another by techniques such as bonding or welding.

13. Cable according to one or more of the preceding claims,
characterized in that the suspension strand (4) is composed of identical chain links (12).

14. Cable according to one or more of the preceding claims,
characterized in that the chain links (12) have different lengths.

15. Method for producing a supply cable (1) according to Claim 1 having the following first procedure step:
1. A plurality of conducting wires (3) are positioned parallel to one another, characterized by the following further procedure steps:
2. one suspension element and one guide element (=4) are positioned parallel and next to the conducting wires (3) and
3. both the conducting wires (3) and the suspension element and guide element (=4) are extrusion-coated with the material which forms the insulating sheath (11), for the purpose of connecting in one operation, the conducting wires (3) and suspension element and guide element (=4) by techniques such as bonding or welding.

## Revendications

1. Câble d'alimentation (1) comprenant:
- au moins une ligne d'alimentation (3),
- un brin porteur (4) agencé parallèlement à ladite ligne et constitué d'éléments (12) agencés en rangée les uns contre les autres dans la direction longitudinale du câble, et
- une enveloppe en gaine (11) qui entoure la ligne d'alimentation (3) et le brin porteur (4),
caractérisé en ce que
- les éléments (12) sont reliés les uns aux autres au moyen d'articulations pour former une chaîne cinématique ouverte qui constitue le brin porteur (4), et
- la mobilité en pivotement des articulations est limitée à une zone de pivotement entre deux positions extrêmes.

2. Câble selon la revendication 1, caractérisé en ce que les éléments de chaîne voisins (12) se trouvent dans l'une des positions extrêmes dans une position étendue dans laquelle ils sont disposés en rangée les uns contre les autres approximativement en ligne droite.

3. Câble selon les revendications 1 et 2, caractérisé en ce que les éléments de chaîne voisins (12) se trouvent dans l'autre position extrême dans une position de flexion dans laquelle ils forment les bras d'un angle de flexion (α) avec l'articulation en tant que sommet.

4. Câble selon la revendication 3, caractérisé en ce que l'angle de pliage (α) est susceptible d'être adapté à la flexibilité de la ligne d'alimentation (3).

5. Câble selon l'une ou plusieurs des revendications précédentes, caractérisé en ce qu'il est prévu des éléments d'accouplement détachables (16, 23) pour former les articulations aux extrémités des éléments (12) de la chaîne.

6. Câble selon la revendication 5, caractérisé en ce que
- une saillie d'encliquetage (16) est agencée à l'extrémité de l'élément de chaîne (12) qui tient lieu d'extrémité frontale d'accouplement (14),
- une gorge de réception (23), réalisée de façon complémentaire à la saillie d'encliquetage (16), est agencée à l'extrémité opposée à l'extrémité frontale d'accouplement (14), qui tient lieu d'extrémité frontale de réception (15),
et en ce que la saillie d'encliquetage (16) et la gorge de réception (23) sont les éléments d'accouplement.

7. Câble selon la revendication 6, caractérisé en ce que la saillie d'encliquetage (16) et la gorge de réception (23) de deux éléments de chaîne voisins (12) reliés l'un à l'autre, forment une articulation à rouleaux.

8. Câble selon la revendication 7, caractérisé en ce que les régions de l'extrémité frontale d'accouplement (14) voisines de la saillie d'encliquetage (16) sont réalisées sous la forme d'épaulements d'appui (18, 19) pour des butées (20, 21) sur le côté frontal de réception (15) de l'élément de chaîne voisin (12).

9. Câble selon la revendication 8, caractérisé en ce que les butées (20, 21) dépassent à la manière d'une fourche sur l'extrémité frontale de réception (15) de l'élément de chaîne (12) et forment entre elles la gorge de réception (23).

10. Câble selon l'une ou plusieurs des revendications précédentes, caractérisé en ce qu'une ligne d'alimentation (3) est flanquée dans le manteau (11) au moins d'un côté par un brin porteur (4).

11. Câble selon l'une ou plusieurs des revendications précédentes, caractérisé en ce que le manteau (11) contient un canal creux (27) pour l'introduction du brin porteur (4).

12. Câble selon l'une ou plusieurs des revendications précédentes, caractérisé en ce que le manteau (11) relie l'un à l'autre la ligne d'alimentation (3) et le brin porteur (4) de par leur matière.

13. Câble selon l'une ou plusieurs des revendications précédentes, caractérisé en ce que le brin porteur (4) est composé d'éléments de chaîne (12) de même structure.

14. Câble selon l'une ou plusieurs des revendications précédentes, caractérisé en ce que les éléments de chaîne (12) sont de longueurs inégales.

15. Procédé pour fabriquer un câble d'alimentation (1) selon la revendication 1, comprenant la première étape suivante :
1. on positionne parallèlement les uns à côté des autres plusieurs fils conducteurs (3),
caractérisé par les autres étapes suivantes :
2. on positionne à côté des fils conducteurs (3) un élément de support et de guidage (4) qui s'étend parallèlement, et
3. on enrobe les fils conducteurs (3) ainsi que l'élément de support et de guidage (4) avec le matériau qui forme l'enveloppe isolante (11) afin de relier les fils conducteurs (3) et l'élément de support et de guidage (4) de par leur matière, au cours d'une opération de travail.
